# EUROPÄISCHE PATENTSCHRIFT

(11) **EP 1 173 379 B1**
(45) Veröffentlichungstag und Bekanntmachung des Hinweises auf die Patenterteilung: **06.08.2003**
(21) Anmeldenummer: 00927096.8
(22) Anmeldetag: 27.04.2000
(51) Int. Cl.: B65H 59/22, H01F 7/14, F16F 7/108

(54) **AKTUATOR UND FADENBREMSE MIT EINEM AKTUATOR**
ACTUATOR AND THREAD BRAKE COMPRISING AN ACTUATOR
ACTIONNEUR ET TENDEUR DE FIL A FREIN POURVU D'UN ACTIONNEUR

(30) Priorität: 27.04.1999 DE 19919122
(43) Veröffentlichungstag der Anmeldung: 23.01.2002
(60) Teilanmeldung: 03012894.6
(73) Patentinhaber: IROPA AG, 6340 Baar (CH)
(72) Erfinder: BIRGER, Johansson, S-523 33 Ulricehamn (SE)
(74) Vertreter: Grünecker, Kinkeldey, Stockmair & Schwanhäusser Anwaltssozietät
(86) Internationale Anmeldenummer: EP0003845
(87) Internationale Veröffentlichungsnummer: WO00064795

(56) Entgegenhaltungen:
- EP-A- 0 527 510
- EP-A- 0 597 239
- EP-A- 0 816 275
- WO-A-97/49630
- US-A- 3 750 065

## Beschreibung

Die Erfindung betrifft einen Aktuator gemäß Oberbegriff des Anspruchs 1 sowie eine Fadenbremse gemäß Oberbegriff des Anspruchs 12.

Ein aus EP-A-0 597 239 bekannter Aktuator für eine Fadenbremse des Tellerbremsentyps ist als Permanentmagnet-Motor ausgebildet, der eine 360°-Drehbewegung der den Faden beaufschlagenden Komponente in vier extrem raschen Schritten ausführt. Die jeweilige Stopposition nach einem ausgeführten Schritt wird durch magnetische Kräfte definiert, derart, dass jeweils eine Brems- oder eine Freigabestellung für den Faden definiert wird. Durch das von der Erregerspule aufgebaute Magnetfeld wird der Anker in der Stopposition elektromagnetisch gefesselt. Wenn sich der Anker schwungbedingt über eine Gleichgewichtslage parallel zum jeweiligen Erregermagnetfeld weiterdrehen möchte, bewirkt der entstehende Winkel zwischen den beiden Magnetfeldern ein Rückstellmoment für den Anker. Das Rückstellmoment bildet quasi einen elektromagnetischen Anschlag. Nachteilig ist, dass das für die Stopposition erzeugte Rückstellmoment einen Rücksprung für die Komponente der Fadenbremse bedeutet, der das Brems- oder Löseverhalten unerwünscht beeinflussen kann, d.h., der Übergang in die jeweilige Bremsstellung oder die Lösestellung lässt sich nicht sauber steuern.

Aus der Praxis sind femer steuerbare Fadenbremsen mit einem elektrischen Drehaktuator bekannt, wobei die Stopposition durch einen gummielastischen Anschlag definiert wird, gegen den die Komponente der Fadenbremse nach der sehr schnellen Verstellbewegung anschlägt. Es kommt zu einem Rücksprung, der in der Brennstellung bzw. der Lösestellung bewirken kann, dass die Komponente noch einen ungewollten Einfluss auf den Faden nimmt. Ein Rücksprung kann auch bei einem durch einen Linearmagneten zwischen einer Sperrstellung und einer Freigabesteilung bewegten Stopper einer Stopvorrichtung auftreten, wie sie bei Fadenliefergeräten für Düsenwebmaschinen bekannt sind. Aufgrund des Rücksprungs kann der zu blockierende Schussfaden durchschlupfen oder der abgezogene Schussfaden gefangen werden.

Der Erfindung liegt die Aufgabe zugrunde, einen schnellen und kleinbauenden Aktuator der eingangs genannten Art sowie eine gesteuerte Fadenbremse mit einem Aktuator zu schaffen, bei denen trotz schneller Verstellbewegungen die bewegliche Komponente die Stopposition rücksprungfrei einnimmt.

Die gestellte Aufgabe wird mit den Merkmalen des Anspruchs 1 und den Merkmalen des Anspruchs 12 gelöst.

Der (bei einer Linearbewegung) mit seiner Masse bzw. (bei einer Drehbewegung) mit seinem Trägheitsmoment sehr genau auf die Masse bzw. das Trägheitsmoment der sich bewegenden Teile abgestimmte Zusatzkörper übernimmt die gesamte Aufschlagenergie rücksprungfrei. Die sich bewegenden Teile kommen an der Stopposition schlagartig zum Stillstand. Der Zusatzkörper bewegt sich weiter, wobei seine Energie in der Bewegungsdämpfvorrichtung aufgezehrt wird, ehe er verzögert in seine Ausgangsposition zurückkehrt, ohne die bereits rücksprungfrei zum Stillstand gebrachten Teile in der Gegenrichtung zu verlagern. In der Fadenbremse führt dies zu dem Vorteil, dass beim Übergang zu einer Bremsposition bzw. einer anderen Bremsposition oder einer Löseposition kein Nachschwingen der sich bewegenden Teile auftritt und der Brems- oder Löseeffekt nicht nachteilig beeinflusst wird. Innerhalb der bei gesteuerten Fadenbremsen üblicherweise zur Verfügung stehenden Zeitspanne von rund 5 ms kommen die sich bewegenden Teile an einer exakt bestimmten Position rücksprungfrei zum Stillstand. Dies ist zweckmäßig bei Aktuatoren bzw. Fadenbremsen, deren Arbeitsoperation mit einer Dreh- oder einer linearen Bewegung erfolgt. Der Aktuator kann dabei ein magnetisch, elektromagnetisch, elektrisch, hydraulisch, mechanisch oder pneumatisch beaufschlagtes Antriebsorgan aufweisen. Diese besonders zweckmäßige Funktion beruht auf dem erfindungsgemäßen Kunstgriff, die Aufschlagenergie zunächst vollständig in den Zusatzkörper einzuleiten, um eine absoluten Stillstand und eine korrekte Positionierung der bewegten Teile zu erreichen, und dann erst die Aufschlagenergie lokal getrennt aufzuzehren und den Zusatzkörper verzögert und gedämpft derart in die Ausgangslage zurückzustellen, dass auch dann kein Rücksprung mehr erzeugt wird.

Zweckmäßig hat die Bewegungsdämpfvorrichtung für den Zusatzkörper nachgiebige Reibungsdämpfmittel und eine gedämpfte und im Hub exakt begrenzte Rückstellcharakteristik. Der Zusatzkörper bringt die beweglichen Teile in der Ausgangsposition schlagartig zum Stillstand und hat dann länger Zeit, seine Energie aufzehren zu lassen und sich in die Ausgangsposition zurückzustellen. Die hierfür nutzbare Zeitspanne entspricht maximal der Zeitspanne für zwei aufeinanderfolgende Arbeitstakte des Aktuators in derselben Bewegungsrichtung. Durch das Zwischenschalten des Zusatzkörpers wird ein Zeitpuffer für die Energieaufzehrung und damit die Möglichkeit geschaffen, die Energieaufzehrung in exakt vorherbestimmbarer Weise und relativ langsam durchzuführen. Beim Aufschlag wird ein Anteil der kinetischen Energie in Wärmeenergie umgewandelt, während der verbleibende Teil der kinetischen Energie von der Zusatzmasse in die Bewegungsdämpfvorrichtung eingeleitet und in Wärmeenergie umgewandelt wird. Die Rückstellcharakteristik stellt den Zusatzkörper genau in die Ausgangsposition zurück, und zwar relativ langsam und ohne Rücksprung für die angehaltenen Teile.

Herstellungstechnisch einfach ist es, den Zusatzkörper aus einem hasten bzw. unnachgiebigen Material, z.B. aus Kunststoff wie Polyurethan, herzustellen, und die Bewegungsdämpfvorrichtung mit der Rückstellkomponenten aus einem hochnachgiebigen Material wie weichelastischem Kunststoff, z.B. in Form eines Polyurethan-Schaumstoffkissens, auszubilden, das den Zusatzkörper lagert oder gegebenenfalls sogar erst verzögert die Energieaufzehrung und Rückstellung des Zusatzkörpers vornimmt, damit ein Rücksprung der beweglichen Teile vermieden wird.

Günstig sind zwei den Arbeitshub des Aktuators bzw. der Komponente begrenzende Stopvorrichtungen vorgesehen, in denen jeweils mindestens ein Zusatzkörper für das Anhalten der sich bewegenden Teile sorgt. Jede Stopvorrichtung kann auch in mindestens zwei bezüglich der Bewegungsachse der Komponente symmetrische Hälften aufgeteilt sein, so dass dann für eine Stopposition zwei Zusatzkörper und zwei Bewegungsdämpfvorrichtungen vorgesehen sind. Es sollte die Masse (bei linearer Bewegung des Aktuators) bzw. das Trägheitsmoment (bei Drehbewegung des Aktuators) relativ genau der Masse bzw. dem Trägheitsmoment sämtlicher bis in die Stopposition zu bewegenden Teile entsprechen. Bei Aufteilung einer Stopvorrichtung in wenigstens zwei symmetrische Hälften benötigt der jeweilige Zusatzkörper natürlich nur die Hälfte der Masse bzw. des Trägheitsmoments, die bzw. das mittels des Anschlagelements wirksam wird.

Eine zweckmäßige Ausführungsform verwendet einen elektrischen Aktuator mit einem Linear- oder Dreh-Elektromotor. Besonders zweckmäßig ist der Linear- oder Dreh-Elektromotor ein Permanentmagnet-Motor, der aus wenigen Bauteilen mit hoher Funktionssicherheit und schnellem Ansprechverhalten herstellbar ist.

Günstig ist die Stopvorrichtung bzw. jede Stopvorrichtung baulich in den Elektromotor bzw. Permanentmagnet-Motor eingegliedert. Dadurch lässt sich bereits herstellerseitig eine exakte Abstimmung vornehmen.

Bei einem reversiblen Permanentmagnet-Motor eines Dreh-Aktuators ist zweckmäßigerweise jede Stopvorrichtung zwischen dem Anker und einem Drehlager für eine Ankerwelle und/oder der Komponente bzw. zwischen zwei Drehlagern der Ankerwelle angeordnet. In diesem Bereich steht zum Unterbringen der Stopvorrichtung genügend Bauraum zur Verfügung.

Bei einem Permanentmagnet-Motor sollte im Hinblick auf schnelles Ansprechverhalten und hohe Leistung möglichst der Gesamtquerschnitt des Ankers für die elektromagnetische Polarisierung nutzbar sein. Hingegen sollte die Ankerwelle für eine präzise Drehlagerung sorgen und bei möglichst geringem Drehwiderstand lange Lebensdauer garantieren. Dies sind an sich konträre Anforderungen. Um eine Durchdringung des Ankers durch die Ankerwelle zu vermeiden, kann deshalb die Komponente bzw. ein Ankerwellenabschnitt einen Nabenteil aufweisen, der ein Stirnende des Ankers topfartig übergreift oder in das Stirnende plattenförmig eingesetzt ist. Die Ankerwelle bzw. Komponente kann, da sie nicht aktiver Teil des Ankers sein braucht, im Hinblick auf Festigkeit und Funktionalität optimiert sein, während der nicht durchdrungene Anker für eine optimale magnetische Funktion auszulegen bzw. über seinen Gesamtquerschnitt zu polarisieren ist.

Zweckmäßig ist der Anker beidendig mittels koaxialer Spindeln drehgelagert, die jedoch den Anker nicht durchdringen. Dies vereinfacht die Herstellung des Permanentmagnet-Motors und verbessert dessen Arbeitsverhalten.

Wenn in der Fadenbremse das Antriebsorgan für die Komponente der Anker eines Elektromotors ist, lassen sich rasche lineare oder drehende Stellbewegungen erzeugen.

Besonders zweckmäßig ist in der Fadenbremse das Antriebsorgan der magnetisch polarisierte Anker eines Permanentmagnetmotors.

Die Stopvorrichtung, die für die Positionierung der beweglichen Teile der Fadenbremse ohne Rücksprung verantwortlich ist, ist zweckmäßigerweise in den Aktuator eingegliedert.

Anhand der Zeichnungen werden Ausführungsformen des Erfindungsgegenstandes erläutert. Es zeigen:
- Fig. 1: eine Perspektivansicht einer Fadenbremse mit einem Aktuator,
- Fig. 2: einen Achsschnitt einer anderen Ausführungsform einer Fadenbremse mit einem als Permanentmagnet-Motor ausgebildeten Dreh-Aktuator,
- Fig. 3: schematisch den Aufbau des Permanentmagnet-Motors von Fig. 2, in einem Querschnitt,
- Fig. 4: einen perspektivischen Teilschnitt in der Schnittebene IV-IV von Fig. 5 des Permanentmagnet-Motors mit baulich eingegliederter Stopvorrichtung,
- Fig. 5: einen Querschnitt in der Schnittebene V-V von Fig. 4,
- Fig. 6 + 7: zwei Detailausbildungen, jeweils in einem Achsschnitt,
- Fig. 8: eine perspektivische Ansicht eines Details,
- Fig. 9 - 11: schaubildartig drei Betriebszustände des Aktuators bzw. der Fadenbremse, und
- Fig. 12: schaubildartig einen Betriebszustand eines Aktuators oder einer Fadenbremse entsprechend dem Stand der Technik.

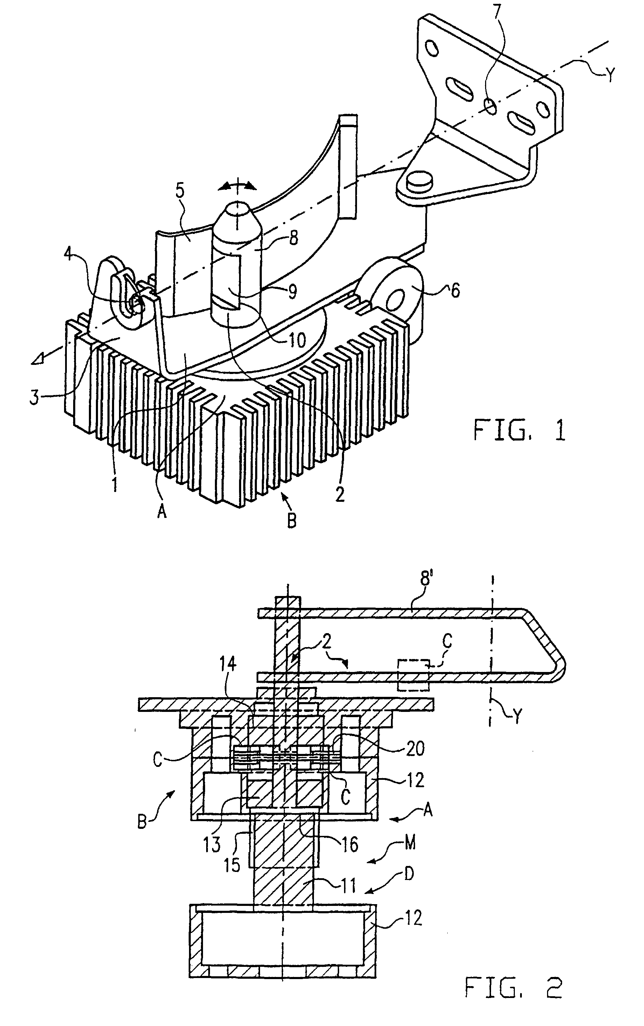

Bei einer in Fig. 1 gezeigten Fadenbremse B zum variablen Bremsen eines laufenden Fadens Y ist an einem Halter 1 ein blockförmiger Aktuator, beispielsweise ein Permanentmagnet-Motor, befestigt, der eine Komponente 2 drehend um eine Drehachse antreibt. Fadenleitelemente 4, 7 bestimmen den Laufweg des Fadens Y durch die Fadenbremse B, wobei das Fadenleitelement 4 in einer Endwand 3 angeordnet ist. Am Halter 1 ist ferner als aktives Bremselement eine Federlamelle 5 so angebracht, daß sie mit bei 6 einstellbarem Anpressdruck elastisch nachgiebig gegen einen in die Komponente 2 integrierten zylindrischen Bremsteil 8 anliegt. In wenigstens einem Umfangsbereich der Komponente 2 ist ein vertieftes Fenster 9 ausgespart, das mit Übergängen 10 in den zylindrischen Bremsteil 8 übergeführt ist. Der Faden Y wird zwischen der Federlamelle 5 und der Komponente 2 durchgezogen. Je nach Drehposition der Komponente 2 wird der Faden Y zwischen 8 und 5 geklemmt und gebremst oder durch das Fenster 9 klemmungsfrei durchgezogen. Die Fadenbremse B wird verstellt durch Verdrehen der Komponente 2 mittels des Aktuators A über beispielsweise jeweils 90° in eine exakt definierte Position, so dass entweder der zylindrische Bremsteil 8 an der Federlamelle 5 anliegt, oder zwischen der Federlamelle 5 und dem Fenster 9 ein Freiraum vorliegt.

Eine in Fig. 2 gezeigte Fadenbremse B ist eine sogenannte Umlenkbremse. Ein Bremsteil ist als U-förmiger Bügel 8' ausgebildet, der an der um ihre Mittelachse drehbaren Komponente 2 befestigt ist und an dem strichpunktiert angedeuteten Faden Y angreifen kann. In Abhängigkeit von der Drehposition der Komponente 2 wird der Faden Y mehr oder weniger umgelenkt (stärkere oder schwächere Bremswirkung) oder wird der Faden überhaupt nicht umgelenkt (keine Bremswirkung bzw. Lösestellung). Zumindest zwei in den Aktuator A eingegliederte Stopvorrichtungen C definieren zwei unterschiedliche Drehpositionen der Komponente 2, zwischen denen diese vom Aktuator A sehr schnell, z.B. innerhalb weniger Millisekunden, verstellt wird.

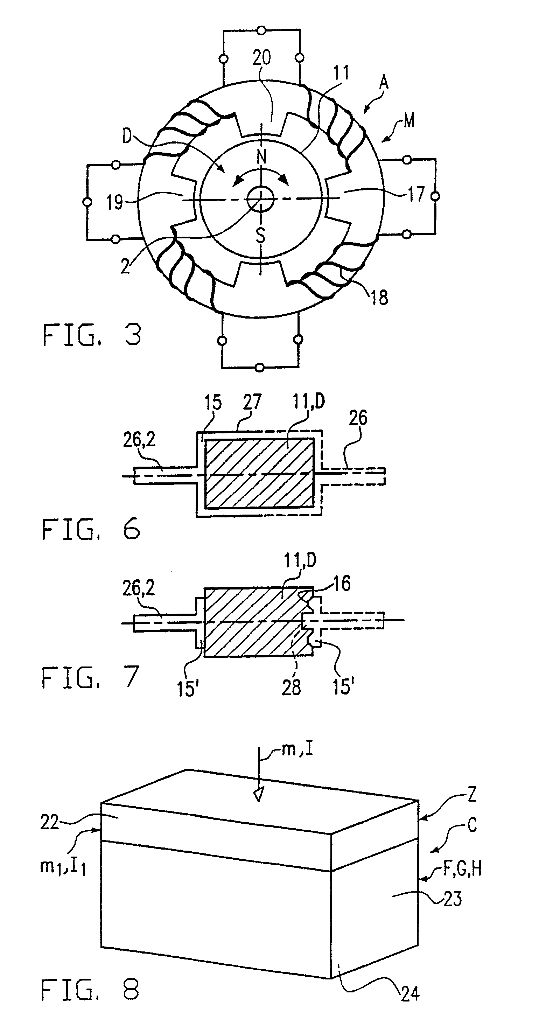

Die Komponente 2 (eine Art Spindel) ist mit einem magnetisch polarisierten Anker 11 eines Permanentmagnet-Motors M (der anhand der Fig. 3 bis 5 eingehend erläutert wird) als drehendes Antriebsorgan D verbunden. Für den Anker 11 bzw. die Komponente 2 sind in Gehäuseteilen 12 Drehlager 13, 14 vorgesehen. Die Komponente 2 enthält ein stiftartiges Anschlagelement 29, das auf die die Stopposition definierenden Stopvorrichtungen C ausgerichtet ist. Für jede Drehrichtung kann ein Paar Stopvorrichtungen C vorgesehen sein. Der Permanentmagnet-Motor M ist reversibel. Die Stopvorrichtungen C sind zwischen den Drehlagern 13, 14 in die Gehäuseteile 12 eingegliedert. Es ist möglich, die Stopvorrichtungen C beim unteren Ende des Ankers 11 innerhalb oder außerhalb der Gehäuseteile 12 anzuordnen, oder - wie gestrichelt gezeichnet - im Bewegungsweg des an der Komponente 2 angebrachten Bügels 8'.

Die Komponente 2 durchsetzt den Anker 11 nicht, sondern besitzt einen topfartigen Nabenteil 15, der auf den Anker 11 aufgesetzt ist und dessen Stirnende übergreift.

Im Permanentmagnet-Motor M in Fig. 3, der als Aktuator A der Fadenbremsen der Fig. 1 oder 2 dienen kann, ist der Anker 11 ein quer zur Drehachse magnetisch polarisierter Permanentmagnet mit einem magnetischen Nordpol N und einem magnetischen Südpol S. Der Anker 11 ist mittels der Komponente 2 in den Gehäuseteilen 12 in Fig. 2 drehgelagert. Der Anker 11 wird umgeben von einem ringförmigen Kern 17 einer Erregerspule 18. Die Erregerspule 18 besteht aus mehreren Teilwicklungen entsprechend der Schrittzahl des Permanentmagnet-Motors, im vorliegenden Fall aus mindestens zwei Teilwicklungen. Den Schrittstellungen des Ankers 11 zugeordnet weist der Spulenkern 17 der Erregerspule 18 gegenüberliegende Polpaare 19, 20 auf. Zwischen diesen Polpaaren orientiert sich der Anker 11 entsprechend der Polarisierung der Erregerspule 18. Gegenüberliegende Teilwicklungen werden gleichsinnig polarisiert, um eine zum Ankermagnetfeld parallele Magnetisierung aufzubauen. Soll der Anker um 90° verdreht werden, so wird das quer zum ersten Polpaar liegende zweite Polpaar entsprechend magnetisiert. Dann werden die zwischen diesen Polen liegenden Teilwicklungen in gleicher Richtung vom Strom durchflossen, so daß ein zwischen diesen Magnetpolen ausgerichtetes Magnetfeld entsteht. Der Anker orientiert sich entsprechen dem gedrehten Magnetfeld in die neue Drehposition. Auf diese Weise wird der Anker hin- und hergedreht.

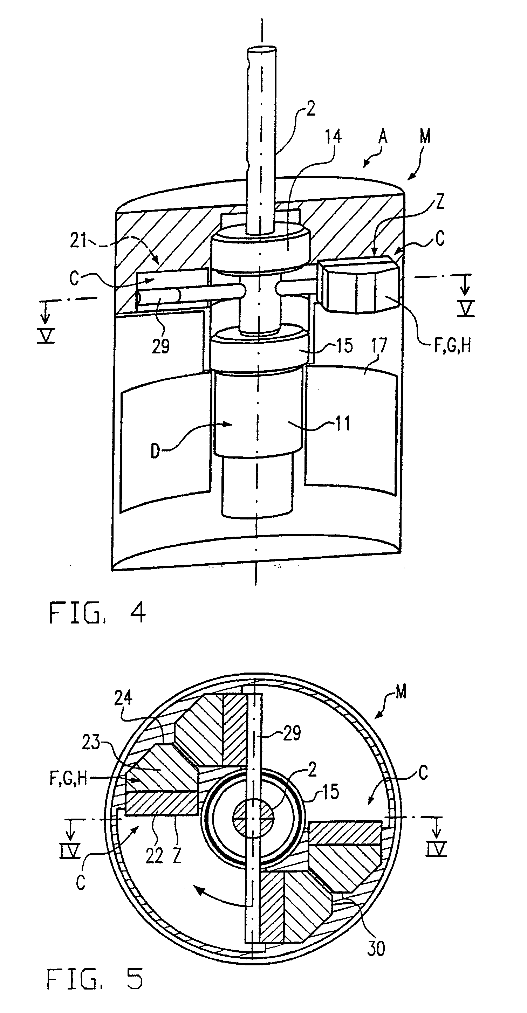

Gemäß Fig. 4 und 5 wird der Anker 11 an der jeweiligen Stopposition nicht durch magnetische Kräfte angehalten, sondern die Stopposition wird definiert durch die mechanische Zusammenarbeit zwischen dem Anschlagelement 29 und jeweils einer Stopvorrichtung C, die in Fig. 4 in den Permanentmagnet-Motor M und zwischen den Nabenteil 15 und das Drehlager 14 baulich eingegliedert ist.

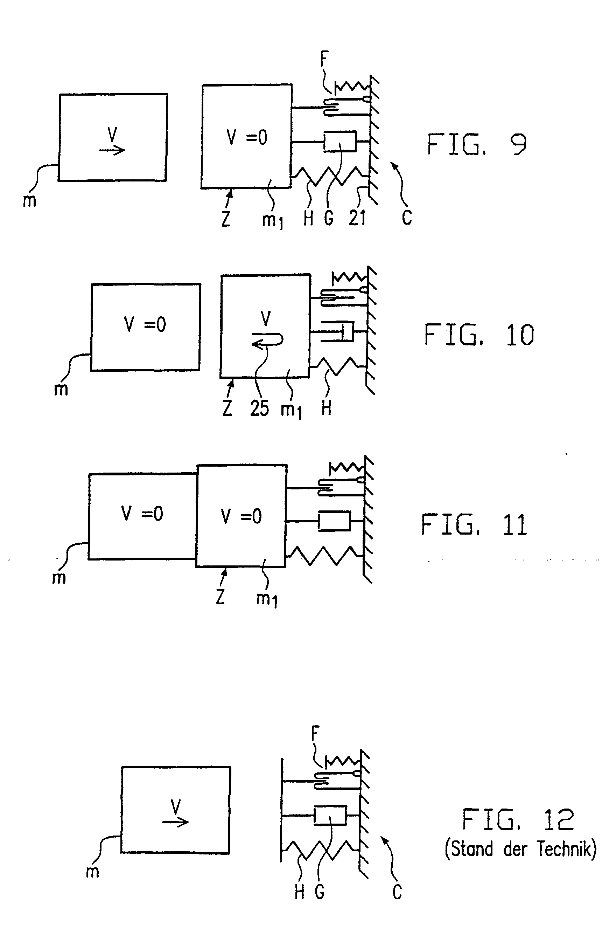

Die Stopvorrichtung C (Fig. 4, 8) weist einen Zusatzkörper Z und eine Bewegungsdämpfvorrichtung F, G, H mit Rückstellfunktion auf und ist an einem stationären Anschlag 21 abgestützt. Der Zusatzkörper Z besteht aus relativ hartem bzw. unnachgiebigen Material, zweckmäßigerweise einem dichten Polyurethankunststoff oder Metall, z.B. mit der Form eines Blocks oder Kissens 22, und hat ein Trägheitsmoment l₁, das dem Trägheitsmoment I der sich drehend bewegenden Teile des Aktuators A bzw. des Aktuators A und der Fadenbremse B, entspricht. Der Zusatzkörper Z ist gegenüber dem stationären Anschlag 21 bzw. der Bewegungsdämpfvorrichtung F, G, H versetzbar. Die Bewegungsdämpfvorrichtung F, G, H enthält einen block- oder kissenförmigen Körper 23 aus hochnachgiebigen Material, z.B. einem Polyurethankunststoff, wie einem Schaumstoff, an dem der Zusatzkörper Z angehaftet sein kann.
Der Körper 23, der eine am Anschlag 21 abstützbare Endfläche 24 besitzt, kann durch Verformung Energie aufzehren und ist elastisch rückstellend.

Bei einem Dreh-Aktuator ist - wie erwähnt - das Trägheitsmoment l₁ des Zusatzkörpers Z auf das Trägheitsmoment l der sich drehend bewegenden Teile abgestimmt. Alternativ kann der Aktuator auch lineare Bewegungen zwischen den Stoppositionen ausführen, wobei dann der Zusatzkörper in seiner Masse m1 auf die Masse m der sich bewegenden Teile abgestimmt ist.

Die Funktion der Stopvorrichtung C soll anhand der Fig. 9, 10 und 11 für einen Linear-Aktuator erläutert werden, und zwar im Vergleich zu einer Stopvorrichtung C, wie sie im Stand der Technik für einen Linear-Aktuator üblich und in Fig. 12 symbolisch gezeigt ist.

In den Fig. 1 bis 8 sind Aktuatoren A für drehverstellbare Komponenten 2 gezeigt. In den Fig. 9 bis 12 wird zur Erläuterung auf die Funktion unter einem Linear-Aktuator A eingegangen, wobei die nachstehenden Erläuterungen analog auch für Dreh-Aktuatoren A etwa der Fig. 1 bis 8 gelten, sofern statt der Masse das Trägheitsmoment berücksichtigt wird. Ein solcher Linear-Aktuator A könnte der sogenannte Stoppermagnet (nicht gezeigt) einer Stopvorrichtung eines Schussfaden-Liefergeräts für eine Düsenwebmaschine sein.

Entsprechend Fig. 12 ist bei der konventionellen Stopvorrichtung C die Masse m der sich bewegenden Teile durch das Antriebsorgan D des Aktuators A gerade mit einer Geschwindigkeit V in Annäherung zur Stopvorrichtung C. Die konventionelle Stopvorrichtung C enthält eine Bewegungsdämpfvorrichtung F, G, H, bestehend aus einem Reibungsdämpfmittel F, additiv oder alternativ einem Verdrängungsdämpfmittel G und einer Rückstellkomponente H. Bei Aufschlag der Masse m mit der Geschwindigkeit V auf die Stopvorrichtung C in Fig. 12 wird die kinetische Energie durch Reibung oder Verdrängung mit Reibung in der Bewegungsdämpfvorrichtung F, G, H aufgezehrt, und war innerhalb eines Bewegungshubes, den die Masse m mit allmählich abnehmender Geschwindigkeit mitmacht. Dabei kann ein Rücksprung der Masse m nicht vermieden werden. Sobald die Energie aufgezehrt, d.h. Reibung in Wärmeenergie umgewandelt, ist, wird durch die Rückstellfunktion H die Masse m in die Ausgangsposition beim Aufschlag zurückgestellt. Dies erfolgt auch mit einem Rücksprung der Masse m.

Erfindungsgemäß (Fig. 9 bis 11) ist hingegen in der Stopvorrichtung C der Zusatzkörper Z vorgesehen, dessen Aufgabe es ist, die korrekte Stopposition für die Masse m der sich bewegenden Teile zu definieren und deren gesamte Aufschlagenergie zu übernehmen und in die Bewegungsdämpfvorrichtung F, G, H einzuleiten. Durch die Übernahme der gesamten Aufschlagenergie von der Masse m bleibt diese ohne jeglichen Rücksprung exakt an der Ausgangs- oder Stopposition stehen. Zu diesem Zweck entspricht die Masse m1 des Zusatzkörpers Z der Masse m. Bei einem drehenden Aktuator A gilt dies für das Trägheitsmoment der sich bewegenden Teile und das Trägheitsmoment des Zusatzkörpers, jeweils bezogen auf die Drehachse.

In Fig. 9 bewegen sich die sich bewegenden Teile mit ihrer Masse m mit der Geschwindigkeit V des Antriebsorgans D, während der Zusatzkörper Z stillsteht (Geschwindigkeit V ist Null). Die Bewegungsdämpfvorrichtung F, G, H ist noch passiv und wird am stationären Anschlag 21 abgestützt.

Zwischen den Phasen der Fig. 9 und 10 kommt es zum Aufschlag. Die Masse m gibt die gesamte kinetische Aufschlagenergie an den Zusatzkörper Z bzw. an dessen Masse m1 ab und bleibt rücksprungfrei stehen (Fig. 10, Geschwindigkeit V = Null). Hingegen bewegt sich der Zusatzkörper Z mit seiner Masse m1 in derselben Richtung wie zuvor die Masse m weiter, wobei seine Energie durch die Bewegungsdämpfvorrichtung F, G, H aufgezehrt wird. Danach kommt die Rückstellfunktion H zum Tragen, so dass der Zusatzkörper Z seine Bewegungsrichtung verzögert umkehrt (Pfeil 25) und wieder in Richtung zu seiner Ausgangsposition (Fig. 9) zurückkehrt. Diese Rückkehrbewegung wird durch die Bewegungsdämpfvorrichtung F, G, H verzögert und gedämpft.

In Fig. 11 ist der Zusatzkörper Z exakt und gedämpft wieder in seine Ausgangsstellung zurückgekehrt. Seine Geschwindigkeit V = Null. Die Masse m der ohnedies bereits angehaltene Teile verharrt ebenfalls mit der Geschwindigkeit V = Null.

Für beide Stoppositionen des Ankers 11 in den Fig. 4 und 5 bzw. den Fadenbremsen B in den Fig. 1 und 2 kann jeweils mindestens eine solche Stopvorrichtung C vorgesehen sein. Zweckmäßigerweise sind die Stopvorrichtungen C in den Aktuator A baulich eingegliedert. Alternativ wäre es denkbar die Stopvorrichtungen C außerhalb des Aktuators A anzuordnen. Günstig kann es sein, jede Stopvorrichtung in zwei beispielsweise bezüglich der Bewegungsachse der sich bewegenden Komponenten symmetrisch angeordnete Hälften aufzuteilen. Dann hat jeder Zusatzkörper Z einer Hälfte nur die Hälfte der Masse m bzw. das halbe Trägheitsmoment I der sich bewegenden Teile.

In Fig. 6 ist der Anker 11 mit dem Nabenteil 15 der Komponente 2 bzw. mit Nabenteilen 15 zweier spindelartiger Wellen 26 verbunden, ohne dass die Komponente 2 oder die Ankerwellen 26 den Anker 11 durchdringen. Der Zweck der Nabenteile 15 ist es, den Anker ordnungsgemäß drehzulagern, ohne ihn zu durchdringen. Die beiden Nabenteile 15 können den zylindrisch ausgebildeten Anker 11 über seine gesamte Länge übergreifen.

In Fig. 7 ist jede Ankerwelle 26 bzw. die Komponente 2 mit einem Nabenteil 15' versehen, der an oder in eine Stirnseite 16 des Ankers 11 eingesetzt ist, wofür formschlüssige Eingriffselemente 28 benutzt werden können.

Fig. 8 zeigt eine Stopvorrichtung C in Blockform. Der Zusatzkörper Z ist ein Polyurethan-Block 22, der mit seiner Basis an einem Polyurethan-Schaumstoffkissen mit der Form eines Blocks 23 angehaftet sein kann. Der Block 23 bildet die Bewegungsdämpfvorrichtung F, G, H, in der Reibungsdämpf- und/oder Verdrängungsdämpfmittel F, G und eine Rückstellkomponente H, analog zur Darstellung der Fig. 9 bis 12, vorgesehen sind. Die Fläche 24 des Körpers 23 kann direkt am Anschlag 21 anliegen oder daran angehaftet werden.

Im Querschnitt der Fig. 5 ist zu erkennen, dass das Anschlagelement 29 ein die Komponente 2 (oder eine Ankerwelle) durchdringender Stift ist, dessen beide Enden jeweils mit einer Stopvorrichtung C im Gehäuse zusammenwirken, so dass sich ein Arbeitshub > 90° für die Komponente 2 ergibt. Die Stopvorrichtungen C sind in den Gehäuseteilen 21 in die Anschläge 21 bildenden Taschen geborgen, und gegebenenfalls festgeklemmt oder festgeklebt. Für einen größeren Arbeitshub könnte das Anschlagelement 21 auch nur einendig vorstehen und mit diesem einen Ende wahlweise mit den Stopvorrichtungen C für die beiden Stoppositionen zusammenarbeiten.

## Patentansprüche

1. Aktuator (A), insbesondere elektrischer Aktuator für eine drehbare oder linear bewegliche Komponente (2) mit wenigstens einer definierten Stopposition, insbesondere Aktuator einer Bremsenkomponente einer Fadenbremse zum variablen Bremsen eines laufenden Fadens, mit einem mit der Komponente (2) in Antriebsverbindung stehendem Antriebsorgan (D), **dadurch gekennzeichnet, dass** an der Stopposition ein an einer rückstellfähigen Bewegungsdämpfvorrichtung (F, G, H; 24) versetzbar abgestützter Zusatzkörper (Z; 22) mit in etwa der Masse (m1) bzw. dem Trägheitsmoment (l₁) des Antriebsorgans (D) und der Komponente (2) vorgesehen ist.

2. Aktuator nach Anspruch 1, **dadurch gekennzeichnet, dass** die Bewegungsdämpfvorrichtung nachgiebige Reibungsdämpfmittel (F, G) und eine Rückstellfederkomponente (H) aufweist.

3. Aktuator nach Anspruch 1, **dadurch gekennzeichnet, dass** der Zusatzkörper (Z) aus hartem Material, insbesondere Kunststoff oder Metall, besteht und an einem nachgiebigen Material, insbesondere einem weichelastischen Kunststoffkissen (24), wie einem Schaumstoffkissen, gelagert oder angebracht ist.

4. Aktuator nach Anspruch 1, **dadurch gekennzeichnet, dass** mindestens zwei in linearem oder Drehabstand angeordnete Stopvorrichtungen (C) vorgesehen sind, und daß an jeder Stopposition wenigstens ein versetzbar an der Bewegungsdämpfvorrichtung (F, G, H) abgestützter Zusatzkörper (Z), vorzugsweise ein Paar bezüglich der Bewegungsachse der Komponente (2) symmetrischer Zusatzkörper (Z), vorgesehen ist.

5. Aktuator nach Anspruch 1 oder Anspruch 4, **dadurch gekennzeichnet, daß** die Masse (m1) bzw. das Trägheitsmoment (l₁) des Zusatzkörpers (Z) zumindest in etwa der Masse (m) bzw. dem Trägheitsmoment (I) des Antriebsorgans (D), der Komponente (2), wenigstens eines der Komponente (2) angehörenden Arbeitsgliedes (8, 8') und eines in seinem Bewegungsweg auf den Zusatzkörper (Z) ausgerichteten Anschlagelements (29), oder bei paarweiser Anordnung jeweils der Hälfte davon, entspricht.

6. Aktuator nach Anspruch 1, **dadurch gekennzeichnet, dass** das Antriebsorgan (D) ein mit der Komponente (2) gekoppelter Anker eines Linear- oder Dreh-Elektromotors (M) ist, und dass der Zusatzkörper (Z, 22) bei einem Dreh-Elektromotor zumindest in etwa das Trägheitsmoment (l₁) des Ankers und der Komponente (2), gegebenenfalls einschließlich der Ankerwelle, und bei einem Linear-Elektromotor zumindest in etwa die Masse (m1) des Ankers, der Komponente (2) und gegebenenfalls einer Ankerwelle aufweist.

7. Aktuator nach Anspruch 6, **dadurch gekennzeichnet, dass** der Linear- oder Dreh-Elektromotor ein Permanentmagnet-Motor mit einem magnetisch polarisierten Anker (11) und einer Erregerspule (18) mit mehreren, einem Kern (17) zugeordneten Teilwicklungen (18) ist.

8. Aktuator nach Anspruch 6 oder 7, **dadurch gekennzeichnet, dass** eine aus dem Zusatzkörper (Z) und dessen Bewegungsdämpfvorrichtung (F, G, H) bestehende Stopvorrichtung (C) in den Elektromotor bzw. Permanentmagnetmotor (M) baulich eingegliedert ist.

9. Aktuator nach Anspruch 7, **dadurch gekennzeichnet, dass** der Zusatzkörper (Z) in Richtung der Ankerwelle zwischen dem Anker (11) und einem Drehlager (14) für die Ankerwelle und/oder die Komponente (2) oder zwischen zwei beabstandeten Drehlagern (13, 14) des Ankers (11) eines reversiblen Permanentmagnet-Drehmotors (M) mit begrenztem Arbeitshub angeordnet ist.

10. Aktuator nach Anspruch 9, **dadurch gekennzeichnet, dass** die Drehkomponente (2) eine Spindel ist, die einen Nabenteil (15) aufweist, der entweder ein Stimende (16) des Ankers (11) topfartig fasst oder in das Stimende (16) eingesetzt ist.

11. Aktuator nach Anspruch 10, **dadurch gekennzeichnet, dass** der Anker (11) beidendig mittels koaxialer Spindeln (26; 2) drehgelagert ist, und dass jede Spindel (26; 2) durchdringungsfrei mit einem Nabenteil (15, 15') am Anker (11) befestigt ist, wobei der Nabenteil (15) entweder topfartig das Stirnende (16) des Ankers (11) fasst oder scheibenartig (15') in die Stimseite (16) eingesetzt ist.

12. Fadenbremse zum variablen Bremsen eines laufenden Fadens (Y), mit einem in einem Aktuator (A) vorgesehenen Antriebsorgan (D) zum linearen oder rotierenden Verstellen einer den Faden (Y) beaufschlagenden Komponente (2) bis in wenigstens eine durch eine Stopvorrichtung (C) vorbestimmte Stopposition, **dadurch gekennzeichnet, dass** jede Stopvorrichtung (C) einen an einer rückstellenden Bewegungsdämpfvorrichtung (F, H, H) versetzbar abgestützter Zusatzkörper (Z) aufweist, der bei einer linear verstellbaren Komponente (2) zumindest in etwa die Masse (m1) und bei einer rotierend verstellbaren Komponente (2) zumindest in etwa das Trägheitsmoment (l₁) der in der Stopposition abzufangenden beweglichen Teile der Fadenbremse (B) und des Aktuators (A), oder bei paarweiser symmetrischer Anordnung jeweils die Hälfte davon, aufweist.

13. Fadenbremse nach Anspruch 12, **dadurch gekennzeichnet, dass** das Antriebsorgan (D) ein Anker eines Elektro-Motors ist.

14. Fadenbremse nach Anspruch 13, **dadurch gekennzeichnet, dass** das Antriebsorgan (D) ein magnetisch polarisierter Anker (11) eines mit einer Erregerspule (18) mit mehreren, einem Kern (17) zugeordneten Teilwicklungen ausgestatteten Permanentmagnet-Motors (M) ist.

15. Fadenbremse nach Anspruch 12, **dadurch gekennzeichnet, dass** die wenigstens eine Stopvorrichtung (C) baulich in den Aktuator (A) eingegliedert ist.

## Claims

1. Actuator (A), particularly electric actuator for a rotatable or linearly moveable component (2) which has to stop at least at one defined stop position, particularly an actuator of a braking component of a yam brake (B) for variably braking a running yarn (Y), said actuator (A) comprising a drive element (D) in driving connection with said component (2) **characterised in that** an additional body (Z, 22) is provided at said stop position, said additional body having substantially the mass (m1) or the moment of inertia (l1) of said drive element (D) and said component (2), said additional body (Z) being displaceably supported at a returnable motion damping device (F, G, H; 24).

2. Actuator as in claim 1, **characterised in that** said movement damping device comprises resilient friction damping means (F, G) and a return spring component (H).

3. Actuator as in claim 1, **characterised in that** said additional body (Z) consists of hard material, particularly plastic material or metal, and is supported at or secured to a resilient material, particularly a soft elastic plastic cushion (24) like a foam material cushion.

4. Actuator as in claim 1, **characterised in that** at least two stop devices (C) are provided with a linear or a rotational distance between them, and that at each stop position at least one additional body (Z) is provided which is supported displaceably at a respective motion damping device (F, G, H), preferably that a pair of additional bodies (Z) are arranged symmetrically with respect to the axis of movement of said component (2).

5. Actuator as in claim 1 or claim 4, **characterised in that** the mass (m1) or the moment of inertia (l1), of the additional body (Z) at least substantially corresponds to the mass (m) or the moment of inertia (I), respectively, of said drive element (D), said component (2), at least one working member (8, 8') belonging to said component (2) and of a stop element (21) aligned with the moving path of the additional body (Z), or in case of a pairwise arrangement corresponding to the half of it, respectively.

6. Actuator as in claim 1, **characterised in that** said drive element (D) is an armature of a linear electromotor or rotatable electromotor (M) coupled to said component (2), and that said additional body (Z, 22) has in case of a rotatable electro-motor at least substantially about the moment of inertia (l1) of said armature and said component (2), optionally inclusive the moment of inertia of the armature shaft, and has in case of a linear electro-motor at least substantially about the mass (m1) of the armature, said component (2) and, optionally, of the armature shaft.

7. Actuator as in claim 6, **characterised in that** said linear electro-motor or rotatable electro-motor is a permanent magnet motor having a magnetically polarised armature (11) and an exciting coil (18) consisting of several partial windings (18) spatially associated to a core (17).

8. Actuator as in claim 7 or 6, **characterised in that** said stop device (C) consisting of said additional body (Z) and its motion damping device (F, G, H) is structurally integrated into the electro-motor or said permanent magnet motor (M), respectively.

9. Actuator as in claim 7, **characterised in that** said additional body (Z) is provided in the direction of said armature shaft between said armature (11) and a rotary bearing (14) for said armature shaft and/or said component (2) or between two distant rotary bearings (13, 14) of said armature (11) of a reversible permanent magnet-rotatable motor (M) operating with a restricted operation stroke.

10. Actuator as in claim 9, **characterised in that** said rotary component (2) is designed as a spindle having a hub part (15) which either grips a front end (16) of said armature (11) like a pot or which is inserted into said front end (16).

11. Actuator as in claim 10, **characterised in that** said armature (11) is supported for rotation at both ends by means of coaxial spindles (26, 2), and that each of said spindles (26, 2) is fixed by a hub part (15, 15') to said armature without penetrating said armature (11), and that said hub part (15) either grips the front end (16) of said armature (11) like a pot or is inserted as a disk into said front side (16).

12. Yarn brake for variably braking a running yarn (Y), comprising a drive element (D) provided in an actuator (A) for a linear or rotating adjustment of a component (2) affecting said yarn (Y) by an adjustment of said component (2) into at least one stop position defined by a stop device (C), **characterised in that** said stop device (C) comprises an additional body (Z) which is supported displaceably at a returning motion damping device (F, G, H), which additional body (Z) in case of a linear adjustable component (2) has at least substantially about the mass (m1) of and in case of a rotatably adjustable component (2) has at least substantially about the moment of inertia (l1) of the moveable parts of said yam brake (B) and said actuator (A), which moveable parts are to be stopped at said stop position, or that said additional body in case of a pairwise symmetrical arrangement of said stop devices (C) comprises half of said mass or half of said moment of inertia.

13. Yarn brake as in claim 12, **characterised in that** said drive element (D) is an armature of an electro-motor.

14. Yarn brake as in claim 13, **characterised in that** said drive element (D) is a magnetically polarised armature (11) of a permanent magnet motor (M) equipped by an exciting coil (11) and several partial windings associated to a core.

15. Yarn brake as in claim 12, **characterised in that** at least one stop device (C) is structurally integrated into said actuator (A).

## Revendications

1. Actionneur (A), en particulier actionneur électrique pour un composant (2) rotatif ou linéairement mobile avec au moins une position d'arrêt définie, en particulier actionneur d'un composant de tendeur de fil à frein pour tendre de manière variable un fil courant, avec un organe d'entraînement (D) se trouvant en relation d'entraînement avec le composant (2), **caractérisé en ce que** dans la position d'arrêt, il est prévu un corps auxiliaire (Z, 22) s'appuyant de manière décalée sur un dispositif d'amortissement du mouvement (F, G, H, 24) capable de rappel ayant à peu près la masse (m1) ou encore le moment d'inertie (11) de l'organe d'entraînement (D) et du composant (2).

2. Actionneur selon la revendication 1, **caractérisé en ce que** le dispositif d'amortissement du mouvement présente des moyens d'amortissement par friction (F, G) élastiques et un composant de ressort de rappel (H).

3. Actionneur selon la revendication 1, **caractérisé en ce que** le corps auxiliaire (Z) est constitué de matière dure, en particulier de matière synthétique ou de métal, et est placé ou appliqué sur une matière élastique, en particulier un coussin (24) en matière synthétique souple, comme un coussin en mousse.

4. Actionneur selon la revendication 1, **caractérisé en ce qu'**il est prévu au moins deux dispositifs d'arrêt (C) disposés à distance linéaire ou distance rotative et **en ce que**, dans chaque position d'arrêt, il est prévu au moins un corps auxiliaire (Z) s'appuyant de manière décalée sur le dispositif d'amortissement du mouvement (F, G, H), de préférence une paire de corps auxiliaires (Z) symétriques par rapport à l'axe de déplacement du composant (2).

5. Actionneur selon la revendication 1 ou la revendication 4, **caractérisé en ce que** la masse (m1) ou encore le moment d'inertie (l1) du corps auxiliaire (Z) correspond au moins à peu près à la masse (m) ou encore au moment d'inertie (I) de l'organe d'entraînement (D), du composant (2), au moins d'un organe de travail (8, 8') appartenant au composant (2) et d'un élément de butée (29) orienté dans sa voie de déplacement vers le corps auxiliaire (Z), ou dans le cas d'une structure par paire à la moitié de ceux-ci.

6. Actionneur selon la revendication 1, **caractérisé en ce que** l'organe d'entraînement (D) est un induit d'un moteur électrique linéaire ou rotatif (M) qui est couplé avec le composant (2) et **en ce que** le corps auxiliaire (Z, 22) a, dans le cas d'un moteur électrique rotatif, au moins à peu près le moment d'inertie (l1) de l'induit et du composant (2), le cas échéant y compris de l'arbre porte-induit et, dans le cas d'un moteur électrique linéaire, au moins à peu près la masse (m1) de l'induit, du composant (2) et le cas échéant d'un arbre porte-induit.

7. Actionneur selon la revendication 6, **caractérisé en ce que** le moteur électrique linéaire ou le moteur électrique rotatif est un moteur à aimant permanent avec un induit (11) magnétiquement polarisé et une bobine excitatrice (18) avec plusieurs enroulements partiels (18) associé à un noyau (17).

8. Actionneur selon la revendication 6 ou 7, **caractérisé en ce qu'**un dispositif d'arrêt constitué du corps auxiliaire (Z) et de son dispositif d'amortissement du mouvement (F, G, H) est intégré en termes de construction dans le moteur électrique ou encore le moteur à aimant permanent (M).

9. Actionneur selon la revendication 7, **caractérisé en ce que** le corps auxiliaire (Z) est disposé dans la direction de l'arbre porte-induit entre l'induit (11) et le coussinet de pivotement (14) pour l'arbre porte-induit et / ou le composant (2) ou entre deux coussinets de pivotement (12, 13) espacés de l'induit (11) d'un moteur rotatif à aimant permanent (M) réversible avec une course motrice limitée.

10. Actionneur selon la revendication 7, **caractérisé en ce que** le composant rotatif (2) est une broche qui présente une partie moyeu (15) qui entoure une extrémité frontale (16) de l'induit à la manière d'un pot ou qui est inséré dans l'extrémité frontale (16).

11. Actionneur selon la revendication 10, **caractérisé en ce que** l'induit (11) est disposé de manière rotative à ses deux extrémités au moyen de broches coaxiales (26, 2) et **en ce que** chaque broche (26, 2) est fixée par une partie moyeu (15, 15') sur l'induit sans qu'il y ait pénétration, la partie moyeu (15) entourant l'extrémité frontale (16) de l'induit à la manière d'un pot ou étant insérée dans l'extrémité frontale (16) à la manière d'un disque.

12. Tendeur de fil à frein pour tendre de manière variable un fil (Y) courant, avec un organe d'entraînement (D) prévu dans un actionneur pour le réglage linéaire ou rotatif d'un composant (2) exerçant une action sur le fil (Y) jusqu'à au moins une position d'arrêt prédéterminée par un dispositif d'arrêt (C), **caractérisé en ce que** chaque dispositif d'arrêt (C) présente un corps auxiliaire (Z) s'appuyant de manière décalée sur un dispositif d'amortissement du mouvement (F, G, H, 24) capable de rappel, qui présente, dans le cas d'un composant (2) ajustable de manière linéaire, au moins à peu près la masse (m1) et, dans le cas d'un composant (2) ajustable de manière rotative, au moins à peu près le moment d'inertie (l1) des pièces mobiles du tendeur de fil à frein (B) ou de l'actionneur (A), qui sont à arrêter dans la position d'arrêt, ou en cas de structure symétrique par paire chaque fois à la moitié de ceux-ci.

13. Tendeur de fil à frein selon la revendication 12, **caractérisé en ce que** l'organe d'entraînement (D) est un induit d'un moteur électrique.

14. Tendeur de fil à frein selon la revendication 13, **caractérisé en ce que** l'organe d'entraînement (D) est un induit (11) magnétiquement polarisé d'un moteur à aimant permanent (M) équipé d'une bobine excitatrice (18) avec plusieurs enroulements associés à un noyau (17).

15. Tendeur de fil à frein selon la revendication 12, **caractérisé en ce que** ledit au moins un dispositif d'arrêt (C) est intégré en termes de construction dans l'actionneur (A).
